# EUROPEAN PATENT SPECIFICATION

(11) **EP 1 068 537 B1**
(45) Date of publication and mention of the grant of the patent: **04.01.2006**
(21) Application number: 99914317.5
(22) Date of filing: 31.03.1999
(51) Int. Cl.: G01P 1/02, H01L 23/04, H01L 23/31, G01L 9/00

(54) **CLAMSHELL COVER ACCELEROMETER**
BESCHLEUNIGUNGSAUFNEHMER
ACCELEROMETRE A ELEMENT DE RECOUVREMENT DOUBLE COQUE

(30) Priority: 03.04.1998 US 80733 P
(43) Date of publication of application: 17.01.2001
(73) Proprietor: AlliedSignal Inc., Morristown, New Jersey 07962-2245 (US)
(72) Inventor: FOOTE, Steven, A., Issaquah, WA 98029 (US)
(74) Representative: Fox-Male, Nicholas Vincent Humbert
(86) International application number: PCT/US1999/007131
(87) International publication number: WO 1999/051991

(56) References cited:
- EP-A- 0 348 361
- EP-A- 0 540 071
- WO-A-91/19985
- WO-A-92/20096
- US-A- 4 658 651
- US-A- 5 310 450
- US-A- 5 394 751
- US-A- 5 554 806
- US-A- 5 623 099

## Description

### FIELD OF THE INVENTION

The present invention relates to the design and construction of an apparatus for housing a sensing device, especially an accelerometer.

### BACKGROUND OF THE INVENTION

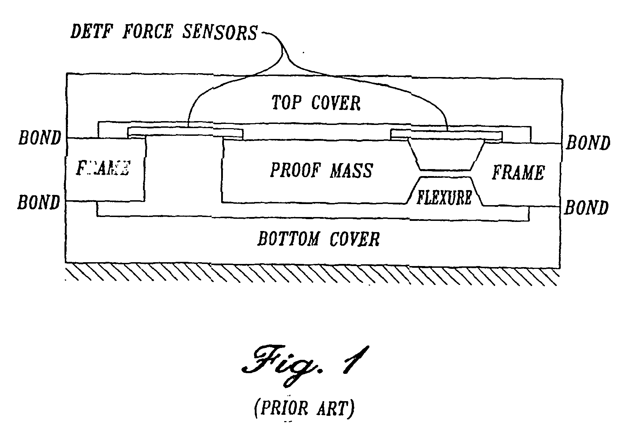

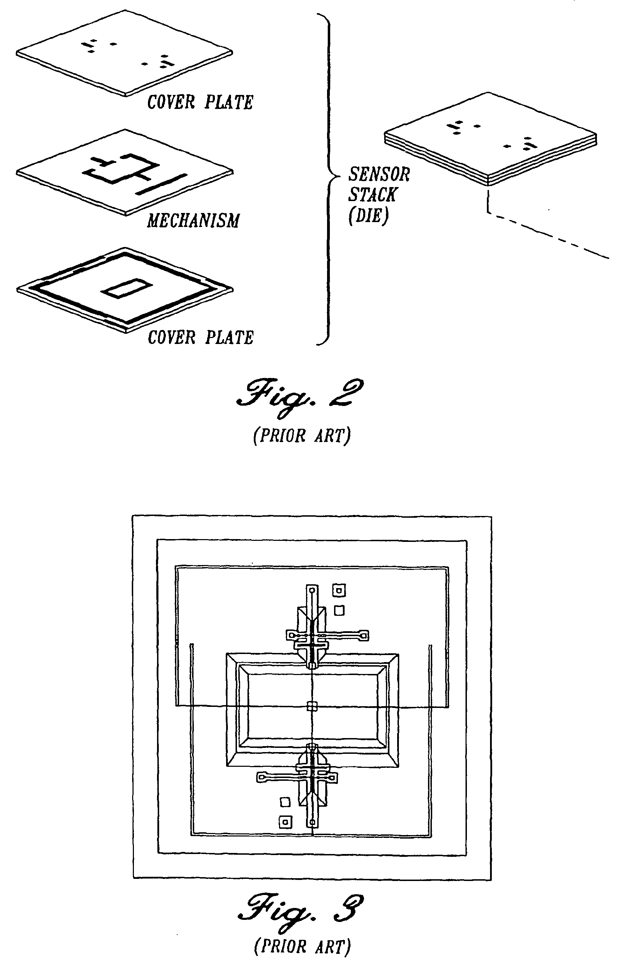

Small, high performance accelerometers are typically made of silicon. As shown in FIGS. 1 and 2, accelerometers commonly employ a planar construction method. A monolithic silicon substrate is micro-machined to yield a pivot mechanism, usually a proof mass suspended from a stationary frame by flexure hinges. The hinges allow rotation of the proof mass about a hinge axis. Top and bottom cover plates are used as damping surfaces and shock stop restraints. Referring to FIG. 2, these cover plates are then bonded to the mechanism that includes the suspended proof mass to form a completed die stack. The die stack in turn is bonded into a header with appropriate drive electronics attached to form the completed accelerometer.

Unfortunately, these bonding operations directly impair accelerometer performance. Available bonding materials, such as epoxy, glass frit, etc., generally have a coefficient of thermal expansion substantially different from that of the silicon. Because the bonding is usually performed at elevated temperatures, there is a standing internal stress condition between the silicon and the bond joints. The delicate sensing mechanism often becomes warped during this bonding process. Relaxation of the internal stress over time and temperature generates drift and hysteresis that limit accelerometer performance.

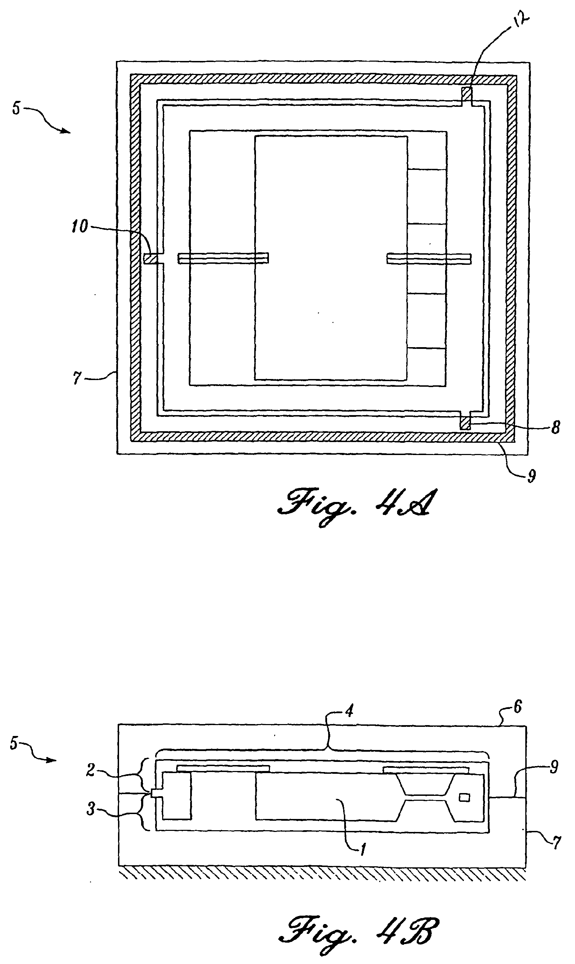

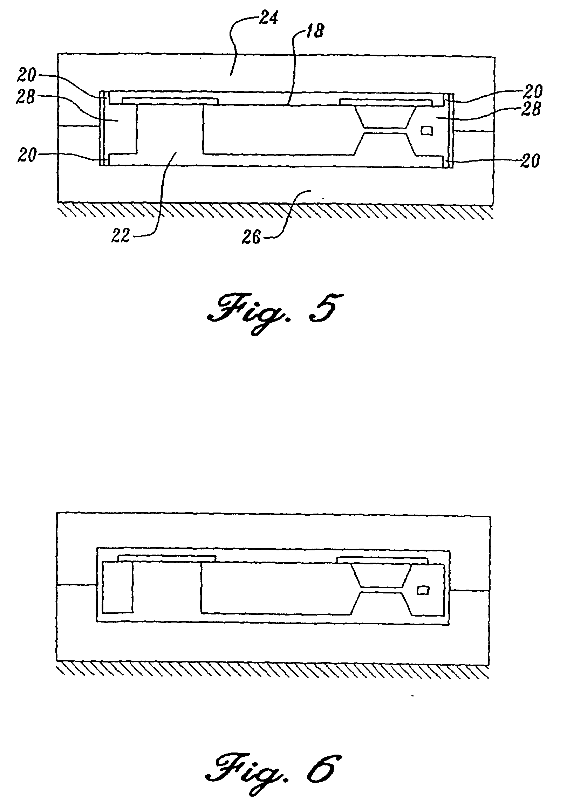

Attempts have been made to isolate the basic mechanism from bond joint stress. An illustrative scheme is presented in FIG. 3. This arrangement involves suspending the acceleration mechanism on a frame, forming the cover bond joints on an outer rim and connecting the frame to the outer rim with suspension beams. This and other prior art arrangements have alleviated the problem somewhat, but they fail to address the source of the problem. Also, the isolation feature generally adds the expense of extra silicon and design complications. Similar arguments apply to joints attaching the completed sensor mechanism to the package header in a completed accelerometer.

### SUMMARY OF THE INVENTION

The present invention provides an accelerometer as defined by Claim 1.

The present invention also provides a method as defined by Claim 2.

The method may include the features of any dependent Claim 3.

The present invention provides a direct reduction of driving stress. It also provides improved isolation at no additional cost. Furthermore, it presents an option to substantially decrease production costs by minimizing usage of expensive silicon. This significant advance in the art is accomplished by replacing conventional cover plates with "clamshell" cover plates so that the sensing mechanism is housed within the plates. A single cover-to-cover bond on the centerline of the cover plate bonding areas bonds the plates to each other. Sensor bonds are optional in a clamshell design. If sensor bonds are desired, they are localized and isolated from the sensing mechanism. Thus, the clamshell design solves the problem of internal stresses more effectively and less expensively than the prior art isolation structures.

### BRIEF DESCRIPTION OF THE DRAWINGS

The foregoing aspects and many of the attendant advantages of this invention will become more readily appreciated as the same becomes better understood by reference to the following detailed description, when taken in conjunction with the accompanying drawings, wherein:
FIGURE 1 is a cross-sectional view of a typical accelerometer;
FIGURE 2 is an exploded view of the accelerometer shown in FIGURE 1;
FIGURE 3 illustrates a typical accelerometer mechanism with supporting frame and isolation feature;
FIGURE 4A illustrates a top view of the lower half of a clamshell cover accelerometer formed in accordance with the present invention;
FIGURE 4B illustrates a side view of a clamshell cover accelerometer shown in FIGURE 4A.

### DETAILED DESCRIPTION OF PREFERRED EMBODIMENT

A clamshell cover 5 for an accelerometer/sensing mechanism 4 formed in accordance with the present invention is illustrated in FIGS. 4A and 4B. In the present invention, cover plates 6 and 7 include more deeply etched cavities 2 and 3, so that instead of merely providing setback for the motion of the accelerometer's proof mass 1, room is provided for the entire sensing mechanism 4. The sensing mechanism 4 is thus entirely enclosed inside the cover plates 6 and 7, with the cover plates 6 and 7 bonded to each other by a centerline bond 9. The sensing mechanism 4 is bonded to bond points 8, 10 and 12 that are attached to the cover plates 6 and 7. the bond points 8, 10 and 12 are preferably very small, localized and optimally placed for minimum sensor impact.

In constructing an actual mechanism, it is likely that the sensor silicon will be thinned towards the centerline at the localized contact points with the cover plates. This wilt put these local stress points at or close to the centerline to reduce warping and to isolate the sensor from even this small error driver.

The present invention thus replaces the two cover bond joints of the prior art which are located on opposing sides of the central plane of the prior art device shown in Figure 1. In the present invention, these two bond joints of the prior art are replaced. with a single centerline bond 9 on the cover plates 6 and 7. This immediately reduces the driving stress, since there is now only one joint and half as much bond material. It also eliminates the potential for any mismatch between top and bottom joints that will otherwise warp the mechanism out of plane. Just as important, however, is the location of the one remaining joint. By positioning the joint 9 symmetrically on the centerline, any bending moment arm through which the bond joint can warp the sensing mechanism 4 is eliminated. Finally, the centerline bond 9 is inherently isolated from the sensing mechanism 4 since it only contacts the sensing mechanism 4 at defined localized points. This allows the internal isolation structure to be eliminated for most if not all applications.

The present invention also provides several cost-saving advantages. Since the sensor mechanism 4 is internally captured by the clamshell covers 6 and 7, the present invention is self-tooling for individual placement of mechanisms into cover wafers before bonding. At first, this might not seem to be an advantage since whole mechanism wafers and cover wafers are currently bonded in one operation at the wafer level. However, whole wafer bonding demands that both good mechanisms and bad be bonded. As a result, any sensor yield loss is multiplied through associated labor costs and lost covers. Additionally, the prior art demands that the sensor silicon area be equal to the cover plate silicon area. Since the cost of silicon for the sensors is more than an order of magnitude greater than the cost of the cover silicon, even a small reduction in sensor material represents a large reduction in cost. The present invention eliminates sensor silicon area currently needed for an isolation feature. It also allows the sensor silicon area to be much smaller than the cover plate area since individual mechanisms can easily be placed into the recesses in whole cover plate wafers for single operation bonding. Additionally, only good sensor mechanisms need be bonded. All of these features conserve expensive sensor silicon.

An important advantage of the present invention is that it docs not require individual placement of the sensor mechanisms into the cover plates as described above. The manufacturer may choose this option and the corresponding benefits. However, should whole wafer processing be deemed more beneficial, then the sensor mounting tabs 8, 10 and 12 shown in FIG. 4A would simply be extended out through the sides of the cover plates 6 and 7. These tabs would then be severed when the bonded assembly is diced.

The present invention also provides greater flexibility of design, allowing for design options not otherwise feasible. Since the self-tooling cover plates allow for easy placement of individual mechanism dice known to be good, multiple designs are much more easily accommodated. Thus, design changes and process experiments become economical instead of prohibitive. These advantages easily outweigh the cost of placing individual dice into self-tooling cover wafers, an operation that could be automated in large-scale production.

## Claims

1. An accelerometer comprising:
a top cover (6) with a cavity formed by a base and a wall mounted to the edges of the base;
a bottom cover (7) with a cavity formed by a base and a wall mounted to the edges of the base, wherein said wall of the bottom cover and the wall of the top cover are bonded together only at a single bonding joint which lies in a bonding plane and in a region about a centreline (9) being intermediate the inner and outer peripheral edges of the abutting surfaces of the top and bottom covers to form a cavity; and
a sensing device (4) positioned within said cavity formed by the bonded walls; and
one or more bond points (8, 10, 12) in the bonding plane separate from the bonding joint for attaching the sensing device to at least one of the top and bottom covers.

2. An accelerometer according to Claim 1 wherein the bonding joint is thinned towards the centerline at the bond point(s).

3. A method for producing an accelerometer including enclosing a sensing device (4) within top and bottom covers (6, 7), said top and bottom covers being cup-shaped with walls supported by a base, said method comprising:
inserting the sensing device into a cavity formed by the walls of at least one of the top or bottom covers;
bonding the wall of the top cover to the wall of the bottom cover at a single bonding joint which lies in a bonding plane and in a region about a centreline (9) of the abutting surfaces of the top and bottom covers to form a cavity that encloses the inserted sensing device; and
bonding the sensing device to bonding points (8, 10, 12) in the bonding plane on at least one of the top or bottom covers.

4. The method of Claim 3, wherein bonding further comprises:
securing under pressure the sensing device within the formed cavity.

## Patentansprüche

1. Beschleunigungsmesser, der Folgendes aufweist:
eine obere Abdeckung (6) mit einem Hohlraum, der durch eine Basis und eine an den Rändern der Basis angebrachte Wand gebildet wird;
eine untere Abdeckung (7) mit einem Hohlraum, der durch eine Basis und eine an den Rändern der Basis angebrachte Wand gebildet wird, wobei die Wand der unteren Abdeckung und die Wand der oberen Abdeckung nur an einer einzigen Verbindungsnaht miteinander verbunden sind, die in einer Verbindungsebene und in einer Region um eine Mittellinie (9) herum liegt, die sich zwischen dem inneren und dem äußeren Umfangsrand der aneinanderstoßenden Flächen der oberen und der unteren Abdeckung befindet, so dass ein Hohlraum gebildet wird;
einen Sensorbaustein (4), der innerhalb des durch die verbundenen Wände gebildeten Hohlraums angeordnet ist; und
einen oder mehrere Verbindungspunkte (8, 10, 12) in der Verbindungsebene, die von der Verbindungsnaht getrennt sind, um den Sensorbaustein an der oberen Abdeckung oder der unteren Abdeckung oder an beiden Abdeckungen anzubringen.

2. Beschleunigungsmesser nach Anspruch 1, wobei die Verbindungsnaht zur Mittellinie hin an dem Verbindungspunkt bzw. den Verbindungspunkten schmaler wird.

3. Verfahren zum Herstellen eines Beschleunigungsmessers, wobei ein Sensorbaustein (4) innerhalb einer oberen und einer unteren Abdeckung (6, 7) eingekapselt wird, wobei die obere und die untere Abdeckung napfförmig sind und Wände aufweisen, die von einer Basis getragen werden, wobei das Verfahren Folgendes umfasst:
Einsetzen des Sensorbausteins in einen Hohlraum, der durch die Wände der oberen Abdeckung oder der unteren Abdeckung oder beider Abdeckungen gebildet wird;
Verbinden der Wand der oberen Abdeckung mit der Wand der unteren Abdeckung an einer einzigen Verbindungsnaht, die in einer Verbindungsebene und in einer Region um eine Mittellinie (9) der aneinanderstoßenden Flächen der oberen Abdeckung und der unteren Abdeckung herum liegt, so dass ein Hohlraum gebildet wird, der den eingesetzten Sensorbaustein einkapselt; und
Verbinden des Sensorbausteins mit Verbindungspunkten (8, 10, 12) in der Verbindungsebene an der oberen Abdeckung oder der unteren Abdeckung oder an beiden Abdeckungen.

4. Verfahren nach Anspruch 3, wobei das Verbinden des Weiteren umfasst, den Sensorbaustein unter Druck innerhalb des gebildeten Hohlraums zu befestigen.

## Revendications

1. Accéléromètre, comprenant:
un élément de recouvrement supérieur (6) comportant une cavité formée par une base et une paroi montée sur les bords de la base;
un élément de recouvrement inférieur (7) comportant une cavité formée par une base et une paroi montée sur les bords de la base, dans lequel ladite paroi de l'élément de recouvrement inférieur et la paroi de l'élément de recouvrement supérieur sont jointes l'une à l'autre uniquement par un seul joint de liaison se trouvant dans un plan de liaison et dans une région autour d'une ligne centrale (9) située entre les bords périphériques intérieur et extérieur des surfaces jointives des éléments de recouvrement supérieur et inférieur pour former une cavité; et
un dispositif de détection (4) positionné à l'intérieur de ladite cavité formée par les parois jointes; et
un ou plusieurs points de jonction (8, 10, 12) dans le plan de liaison distincts du joint de liaison pour attacher le dispositif de détection à au moins un des éléments de recouvrement supérieur et inférieur.

2. Accéléromètre selon la revendication 1, dans lequel le joint de liaison est aminci en direction de la ligne centrale au(x) point(s) de jonction.

3. Procédé pour produire un accéléromètre comprenant la mise en place d'un dispositif de détection (4) à l'intérieur d'éléments de recouvrement supérieur et inférieur (6, 7), lesdits éléments de recouvrement supérieur et inférieur étant en forme de coque avec des parois supportées par une base, ledit procédé comprenant:
l'insertion du dispositif de détection dans une cavité formée par les parois d'au moins un des éléments de recouvrement supérieur ou inférieur;
la jonction de la paroi de l'élément de recouvrement supérieur et de la paroi de l'élément de recouvrement inférieur en un seul joint de liaison se trouvant dans un plan de liaison et dans une région autour d'une ligne centrale (9) des surfaces jointives des éléments de recouvrement supérieur et inférieur pour former une cavité contenant le dispositif de détection inséré; et
la fixation du dispositif de détection à des points de jonction (8, 10, 12) dans le plan de liaison sur au moins un des éléments de recouvrement supérieur ou inférieur.

4. Procédé selon la revendication 3, dans lequel la liaison comprend en outre la fixation sous pression du dispositif de détection à l'intérieur de la cavité formée.
